# EUROPÄISCHE PATENTSCHRIFT

(11) **EP 4 430 468 B1**
(45) Veröffentlichungstag und Bekanntmachung des Hinweises auf die Patenterteilung: **30.07.2025**
(21) Anmeldenummer: 22797272.6
(22) Anmeldetag: 13.10.2022
(51) Int. Cl.: G06F 3/06, H04L 9/40

(54) **FLEXIBLE VERWALTUNG VON RESSOURCEN FÜR MEHRERE BENUTZER**
FLEXIBLE MANAGEMENT OF RESOURCES FOR MULTIPLE USERS
GESTION FLEXIBLE DE RESSOURCES POUR DE MULTIPLES UTILISATEURS

(30) Priorität: 10.11.2021 DE 102021129282
(43) Veröffentlichungstag der Anmeldung: 18.09.2024
(73) Patentinhaber: EPLAN GmbH & Co. KG, 40789 Monheim am Rhein (DE)
(72) Erfinder: ENGLER, Frank, 51069 Köln (DE); FALKENHAGEN, Phillip, 45470 Mülheim an der Ruhr (DE)
(74) Vertreter: Angerhausen, Christoph
(86) Internationale Anmeldenummer: PCT/DE2022/100758
(87) Internationale Veröffentlichungsnummer: WO 2023/083405

(56) Entgegenhaltungen:
- US-A1- 2003 126 394
- US-A1- 2010 030 578
- US-A1- 2021 124 509

## Beschreibung

### TECHNISCHES GEBIET

Die hier offenbarte Erfindung liegt auf dem technischen Gebiet der Verwaltung technischer Ressourcen, beispielsweise der Zuteilung von Speicherplatz, für mehrere Benutzer.

### HINTERGRUND

Ressourcen für mehrere Benutzer werden üblicherweise durch einen zentralen Server verwaltet, auf den die Benutzer von Endgeräten aus zugreifen können. Derartige Zugriffe erfolgen beispielsweise mittels eines Webbrowsers oder ähnlicher Client-Server-Software. Eine solche zentrale Verwaltung von Daten wird als Cloud bezeichnet. Die Zugriffe auf einen solchen Server unterliegen üblicherweise Zugangsbeschränkungen und erfordern eine Autorisierung der Benutzer.

TW 2013 42869 offenbart die Erzeugung von Echtheitszertifikaten für Daten, die in einer Cloud gespeichert sind. Anhand dieser Echtheitszertifikate werden Berechtigungen für Speicherplatz vergeben. Hierbei werden Attributinformationen verwendet, die der Überprüfung dienen, ob ein bestimmtes Endgerät auf den Speicherplatz zugreifen darf.

EP 1262930 offenbart die Weitergabe einer Berechtigung an ein mobiles Endgerät, wobei diese Berechtigung die Verwendung dieses mobilen Endgeräts zum Zugriff auf ein bestimmtes Transaktionssystem ermöglicht. Die Berechtigung umfasst Daten, die ein bestimmtes Produkt oder eine Dienstleistung definieren.

US 2003/126394 A1 offenbart: Ein System und Verfahren zum Fernkonfigurieren von Speicherplatz in mehreren Speichergeräten. Die mehreren Speichergeräte umfassen freien Speicherplatz und Speicherplatz, der einem Benutzer zum Speichern von Daten des Benutzers zugewiesen ist, wobei sich der Benutzer an einem von den Speichergeräten entfernten Standort befindet. Ein Teil des freien Speicherplatzes wird automatisch auf den zugewiesenen Speicherplatz übertragen, wenn der Remotebenutzer eine Vergrößerung des zugewiesenen Speicherplatzes anfordert.

US 2021/124509 A1 offenbart: Speicherverwaltungstechniken umfassen das Bestimmen einer Vielzahl von Zielbenutzern mit zu aktualisierenden Speicherkontingenten aus einer Gruppe von Benutzern, die sich ein Speichersystem teilen; das Erhalten eines zu erhöhenden Gesamtspeicherkontingents für das Speichersystem; und das Bestimmen der Zuteilung des Gesamtspeicherkontingents unter der Vielzahl von Zielbenutzern gemäß mindestens einer ersten Strategie, die mit Kontingentanteilen verknüpft ist, und einer zweiten Strategie, die mit einer genutzten Speicherkapazität verknüpft ist. Die Zuteilung des erhöhten Speicherkontingents wird automatisch gemäß einer oder mehrerer vordefinierter Strategien bestimmt, wodurch eine effektive und automatische Zuteilung von Speicherkontingenten erreicht werden kann, wodurch die Speichereffizienz erhöht wird.

US 2010/030578 A1 offenbart: Die hierin beschriebenen Methoden und Systeme beziehen sich auf Online-Methoden der Zusammenarbeit in Gemeinschaftsumgebungen. Die Methoden und Systeme beziehen sich auf ein Online-Bekleidungsmodellierungssystem, mit dem Benutzer dreidimensionale Modelle ihres physischen Profils erstellen lassen können. Benutzer können verschiedene Waren und/oder Dienstleistungen erwerben und in der Online-Umgebung mit anderen Benutzern zusammenarbeiten.

Der Erfindung liegt die Aufgabe zugrunde, Ressourcen für mehrere Benutzer effizient zu verwalten.

### ZUSAMMENFASSUNG

Die Erfindung wird durch die beigefügten Ansprüche definiert.

### KURZE BESCHREIBUNG DER ZEICHNUNGEN

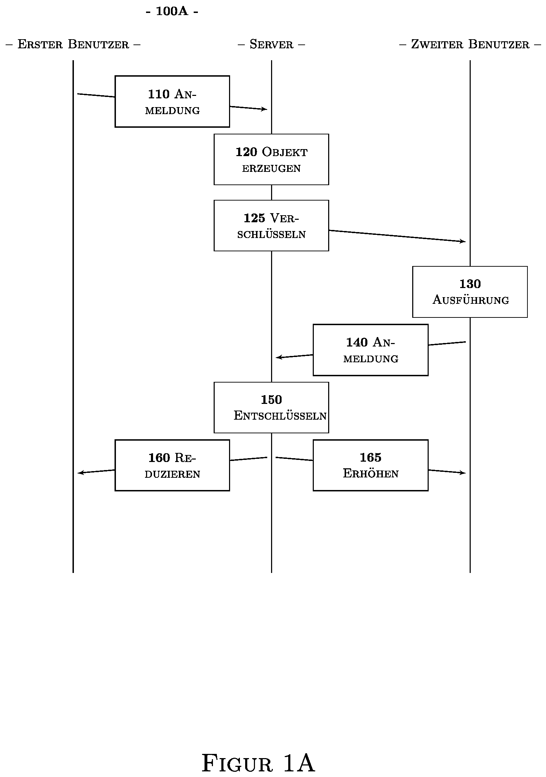

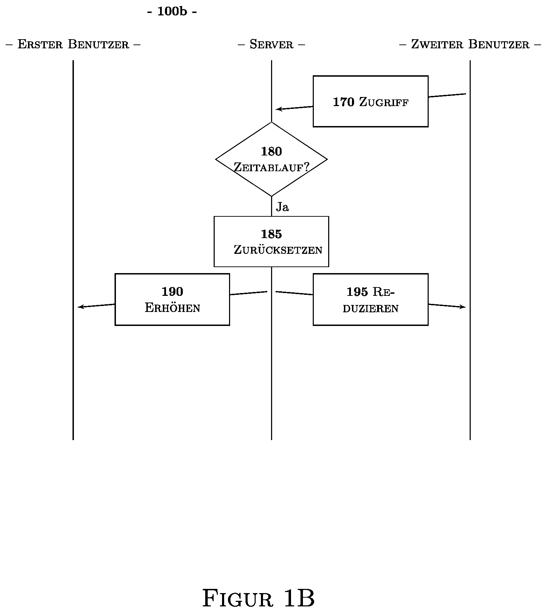

Die Figuren 1A und 1B zeigen Beispiele für erfindungsgemäße Verfahren.

### AUSFÜHRLICHE BESCHREIBUNG

Ausführungsformen der hier offenbarten Erfindung dienen der Verwaltung technischer Ressourcen für mehrere Benutzer. Die Ressourcen können beispielsweise Speicherplatz auf einem Server oder Zugriffe auf bestimmte Daten auf einem Server umfassen. Der Server kann beispielsweise ein Cloud-Server sein oder ein beliebiger Webserver, auf den via HTTP zugegriffen werden kann. Insbesondere kann der Server über eine Benutzerdatenbank verfügen, in der Zugangsdaten gespeichert sind, beispielsweise Benutzernamen und -passwörter, gegebenenfalls auch eindeutige Bezeichner für die Benutzer. Diese Zugangsdaten werden von Benutzern bei deren Registrierung mit dem Server angegeben und/oder bei der Registrierung von dem Server vorgeschlagen.

Benutzer können sich bei dem Server anmelden, und der Server kann den Benutzern Zugriff auf bestimmte Ressourcen ermöglichen. In der Benutzerdatenbank (oder einer separaten Datenbank oder sonstigen Datenstruktur) des Servers kann für einzelne Benutzer angegeben sein, in welchem Umfang diese auf bestimmte Ressourcen zugreifen dürfen (Quota). Dieser Umfang kann beispielsweise in Form eines Speicherlimits und optional einer derzeit genutzten Speichermenge angegeben sein. Speicherzugriffe eines Benutzers erlaubt der Server lediglich dann, wenn die zu speichernden Daten einen verbleibenden Gesamtumfang oder verbleibenden Umfang für den Benutzer nicht überschreiten.

In einer Ausführungsform betrifft die Erfindung ein Verfahren. Das Verfahren beginnt mit der Anmeldung eines Benutzers an dem Server, beispielsweise durch Eingabe von Benutzernamen und -passwort in eine Webseite des Servers, die in einem Browser des Benutzers dargestellt wird. Dieser Anmeldevorgang kann alternativ durch Eingabe anderer oder zusätzlicher Daten erfolgen, beispielsweise durch Eingabe eines Fingerabdruckscans, Irisscans, oder dergleichen, und kann auch automatisiert erfolgen, beispielsweise durch browserseitig gespeicherte Anmeldedaten, die bei Aufrufen der Webseite automatisch vom Browser übermittelt werden. Eingaben des Benutzers in eine im Browser gezeigte Webseite erfolgen mittels eines Endgeräts, beispielsweise einem Desktop-Computer oder Smartphone, oder allgemein mittels eines netzwerkfähigen Geräts.

Die weiteren Schritte des Verfahrens dienen der Definition einer Ressource durch den Benutzer mit dem Ziel, einem anderen Benutzer Zugriff auf diese Ressource zu ermöglichen. Hierzu gibt der Benutzer zunächst Angaben zu der freizugebenden Ressource ein: Der Benutzer kann auf der Webseite beispielsweise eine Maske ausfüllen, die den Umfang der freizugebenden Ressource spezifiziert, etwa unter Verwendung der Maßeinheit Byte. Um den Benutzer hierbei zu unterstützen, kann die Webseite in der Maske einen Regler bereitstellen, der es ermöglicht, eine bestimmte Menge an Bytes auszuwählen. Vorzugsweise entspricht die maximal auswählbare Menge derjenigen Quota, die dem aktuellen Benutzer zugeordnet ist, und entspricht die minimal auswählbare Menge der Null. Alternativ kann dieser Bereich zwischen der von dem aktuellen Benutzer belegten Speichermenge und der verbleibenden Speichermenge für diesen Benutzer liegen. Als weitere Alternative kann der Benutzer ohne derartigen Regler einen freien Betrag an Bytes eingeben, etwa in ein entsprechendes Textfeld, oder kann aus einer grafischen Darstellung seiner Ressourcen einen Bereich auswählen, etwa durch Auswahl eines Kreissektors aus einem Kreis, der die Ressourcen des Benutzers symbolisiert.

Darüberhinaus gibt der Benutzer auch den Benutzer an, für den die Ressource in dem spezifizierten Umfang freigegeben werden soll, sowie eine Zeitdauer, innerhalb der der andere Benutzer auf die Ressource zugreifen darf. Die Angabe des Benutzers kann dessen Emailadresse oder dessen auf dem Server gespeicherten Benutzernamen umfassen. Die Zeitdauer kann als eindimensionaler Wert (Beispiele: 24 Stunden; fünf Wochen; drei Monate etc.) oder als absoluter Start- und Endzeitpunkt (Beispiel: 26.10.2021, 16:35 Uhr, bis 26.10.2022, 16:35 Uhr) angegeben werden. Alternativ kann auch eine Kombination definiert werden, beispielsweise fünf Wochen ab dem 26.10.2021, 16:35 Uhr. Diese Werte können frei in einem Textfeld oder aber mittels einem oder mehreren Reglern definiert werden (erster Regler für Startzeitpunkt, zweiter Regler für Endzeitpunkt), oder auch unter Verwendung einer grafischen Tages-/Wochen-/Monats- und/oder Jahresübersicht. Unterliegt der aktuelle Benutzer seinerseits einer zeitlichen Beschränkung, können diese Elemente die Auswahl der Zeitdauer auf die für den aktuellen Benutzer beziehungsweise dessen Ressourcen geltende Zeitdauer eingeschränkt werden und lediglich diesen Wert als maximal auswählbaren Endzeitpunkt erlauben. Als minimaler Startzeitpunkt gilt der aktuelle Zeitpunkt.

Der Server erzeugt aus diesen Daten ein digitales Objekt. Dieses Objekt kann eine Datei sein, ein Eintrag in einer Datenbank, eine lediglich in einem Arbeitsspeicher gespeicherte Datenstruktur, ein BLOB (Binary Large Objekt) oder ähnliches. In einer Ausführungsform ist oder enthält das Objekt eine URI (Unified Resource Identifier). Dieses Objekt enthält die vorgenannten Angaben betreffend Umfang der freizugebenden Ressource und der Zeitdauer, optional auch eine Bezeichung desjenigen Benutzers, an den die Ressource übertragen werden soll. Außerdem enthält das Objekt eine Angabe über den aktuellen Benutzer, beispielsweise dessen Benutzernamen oder Bezeichner. Dieser kann auf der Serverseite als Bezeichner des Benutzers dienen; alternativ kann zusätzlich zum Benutzernamen ein eindeutiger Bezeichner verwendet werden, der beispielsweise in der Datenbank mit dem Benutzernamen assoziiert ist.

Die Erzeugung des digitalen Objekts kann eine Prüfung umfassen, ob der Umfang der freizugebenden Ressource innerhalb desjenigen Ressourcenumfangs liegt, der dem aktuellen Benutzer zugeordnet ist oder der diesem Benutzer als noch nicht verwendete Ressource (freier Speicherplatz) zugeordnet ist; ist diese Bedingung nicht erfüllt, kann der Vorgang abgebrochen werden oder der Umfang auf den (verbleibenden freien oder gesamten) Ressourcenumfang des aktuellen Benutzers reduziert werden. Diese Prüfung ist jedoch optional, und insbesondere dann nicht erforderlich, wenn bereits bei der Eingabe des freizugebenden Ressourcenumfangs eine Begrenzung auf den Ressourcenumfang des aktuellen Benutzers durchgesetzt wurde, beispielsweise mittels der oben erläuterten Maximalwerte.

Zusätzlich oder alternativ zu der vorgenannten Prüfung kann ermittelt werden, ob der freizugebende Ressourcenumfang denjenigen Ressourcenumfang übersteigt, der einer Gruppe von Benutzern zugeordnet ist. In dieser Ausführungsform unterscheidet die Erfindung zwischen Bezeichnern oder Benutzernamen einzelner Benutzer und Bezeichnern für Gruppen von Benutzern. Ein Gruppenbezeichner kann beispielsweise Mitarbeiter eines Unternehmens bezeichnen. Benutzerbezeichner und Gruppenbezeichner können in derselben Datenbank (Benutzerdatenbank) abgelegt sein, wobei ein Benutzerbezeichner mit einem oder mehreren Gruppenbezeichnern assoziiert (gemeinsam gespeichert) ist, und wobei ein Gruppenbezeichner mit einem oder mehreren Benutzerbezeichnern assoziiert ist. Auf diesen Weise kann für einen Benutzerbezeichner ermittelt werden, welchen Gruppen dieser angehört, und kann für einen Gruppenbezeichner ermittelt werden, welche Benutzer dieser angehören. Gruppen können, analog zu Benutzern, mit einem Ressourcenumfang assoziiert sein. Zur Prüfung, ob ein durch einen Benutzer freizugebender Ressourcenumfang den Ressourcenumfang einer Gruppe nicht übersteigt, sind zwei Alternativen möglich. Erstens kann ein Vergleich des freizugebenden Ressourcenumfangs mit der Summe aus dem Ressourcenumfang des Benutzers und dem Ressourcenumfang von dessen Gruppen vorgenommen werde. Zweitens kann ein Vergleich des freizugebenden Ressourcenumfangs mit der Summe der Ressourcen aller Benutzer der Gruppe(n) des aktuellen Benutzers vorgenommen werden. In diesem zweiten Beispiel genügt es, wenn Gruppenbezeichner in der Datenbank lediglich mit Benutzern assoziiert sind, nicht jedoch mit einem Ressourcenumfang für die gesamte Gruppe; dieser kann anhand der einzelnen Benutzerbezeichner ermittelt werden. Übersteigt der Ressourcenumfang der Gruppe den freizugebenden Ressourcenumfang, kann dieser entweder automatisch angepasst oder der Vorgang abgebrochen werden.

Das digitale Objekt wird vorzugsweise verschlüsselt, beispielsweise mit einem öffentlichen Schlüssel des anderen Benutzers beziehungsweise der Zielgruppe, oder mit einem öffentlichen Schlüssel des Servers oder einem symmetrischen Schlüssel eines Schlüsselpaares, das lediglich dem Server bekannt ist, und wird an den anderen Benutzer oder die Benutzer der Gruppe übermittelt, beispielsweise durch Versenden einer Email oder einer Instant-Nachricht. Alternativ kann der Schlüssel beziehungsweise das Schlüsselpaar eigens erzeugt werden und wird in der Datenbank/Datenstruktur mit dem oder den betreffenden Benutzern und/oder der Gruppe gespeichert. Das Versandmedium (Email oder Nachricht) kann neben dem verschlüsselten Objekt Angaben zu dessen Verwendung enthalten, beispielsweise die Adresse des Servers und Informationen zum Inhalt und/oder eine Anleitung zum Anwenden des Objekts. Im Folgenden wird unter dem zweiten Benutzer, der das Objekt erhält, immer alternativ auch eine oder mehrere Gruppen von Benutzern verstanden, ohne dass dies ausdrücklich genannt wird. Grundsätzlich kann ein Benutzer (zweiter Benutzer), der eine Ressource freigibt, einen oder mehrere Benutzer und/oder Gruppen angeben, und sämtliche Adressaten, also Benutzer und/oder Gruppen und dessen Benutzer können die hier beschriebenen Schritte zum Zugriff auf die Ressource ausführen. Jedoch kann die freigegebene Ressource insgesamt nur einmal verwendet werden, wie nachfolgend verdeutlicht wird.

Der zweite Benutzer kann sich nach Erhalt des digitalen Objekts bei dem Server anmelden, gegebenenfalls nach Durchlaufen eines erstmaligen Registrierungsvorgangs, und überträgt das digitale Objekt zurück an den Server. Diese Übertragung kann in Form eines Uploads des Objekts erfolgen. Alternativ kann der zweite Benutzer einen in der Email oder Nachricht übermittelten Link aktivieren, der die Webseite des Servers in einem Browser des Benutzers lädt und zugleich das digitale Objekt an den Server überträgt. Als weitere Alternative kann der zweite Benutzer das digitale Objekt in der Email oder Nachricht direkt ausführen und dadurch das Laden der Webseite und Übertragen des digitalen Objekts auslösen. Enthält das digitale Objekt eine URI, umfasst das Ausführen des Objekts den Aufruf dieser URI in einem Browser.

Der Server entschlüsselt das digitale Objekt durch Anwendung eines privaten Schlüssels des Servers. Alternativ kann das digitale Objekt bereits auf Seiten des zweiten Benutzers entschlüsselt werden durch Anwendung eines privaten Schlüssels des zweiten Benutzers. Als weitere Alternative kann der Server das digitale Objekt durch Anwendung des bereits erwähnten symmetrischen Schlüssels des Servers entschlüsseln. Ist der Schlüssel konkreten Benutzern zugeordnet, kann der Server den Schlüssel dem Eintrag des betreffenden Benutzers in der Datenbank oder Datenstruktur entnommen werden, und der Vorgang kann abgebrochen werden, falls kein Schlüssel vorliegt. In einer Ausführungsform kann der Schlüssel nach dem Entschlüsseln gelöscht werden.

In der Folge passt der Server Angaben über Ressourcen des ersten und des zweiten Benutzers an die Angaben aus dem digitalen Objekt an. In einer Ausführungsform erfolgt dies sofort nach dem Entschlüsseln des digitalen Objekts; dies gilt insbesondere für Ausführungsformen, in denen die Zeitdauer als eindimensionaler Wert angegeben wurde. Umfasst die Zeitdauer jedoch einen Zeitstartpunkt in der Zukunft, erfolgt die Anpassung erst bei Erreichen dieses Zeitpunkts.

Wurden von dem ersten Benutzer mehrere Adressaten, also mehrere Benutzer und/oder Gruppen angegeben, so wiederholt der Server die vorgenannten Schritte jedes Mal, wenn einer der Adressaten das Objekt ausführt. Die Anpassung von Angaben über jeweils zugeordnete Ressourcen werden für jeden ausführenden Benutzer analog vorgenommen, wobei die konkrete freizugebende Ressource mehrfach, nämlich für jeden dieser Adressaten, eingetragen wird. Hierzu kann das Verfahren intern genaue Angaben über die Ressource, beispielsweise Speicheradressen, für die beteiligten Benutzer vermerken.

Das Anpassen der Angaben durch den Server umfasst Reduzieren desjenigen Ressourcenumfangs, der dem ersten Benutzer zur Verfügung steht, um die Ressourcenangabe in dem digitalen Objekt. Parallel wird der Ressourcenumfang des zweiten Benutzers um diese Angabe erhöht, gegebenenfalls (Ausführungsform mit mehreren Adressaten) neben Angaben zu konkreten Adressen der Ressource. Auf beiden Seiten (erster und zweite(r) Benutzer) wird außerdem der zeitliche Ablauf dieser Reduzierung beziehungsweise Erhöhung gespeichert, beispielsweise durch Speichern eines aktuellen Zeitstempels und der Zeitdauer, oder durch Speichern von Anfangs- und Endzeitpunkt. Der Server kann zudem eine Anweisung definieren, die bei Ablauf der Zeitdauer ausgeführt wird und die Reduzierung und Erhöhung rückgängig macht. Eine solche Anweisung kann auf Unix-Systemen beispielsweise mittels Cron oder systemd implementiert werden. Alternativ kann der Server einen Handler implementieren und diesen am Ablaufdatum ausführen. Als weitere Alternative kann der Server lediglich bei einem konkreten Zugriff eines Benutzers auf den Server prüfen, ob zwischenzeitlich ein oder mehrere Zeitdauern abgelaufen sind, und noch vor diesem Zugriff Reduzierungen/Erhöhungen vornehmen.

Das Reduzieren und Erhöhen von Werten kann direkt an der bereits erläuterten Benutzerdatenbank vorgenommen werden. Alternativ kann eine separate Datenbank vorgesehen sein, die lediglich der Verfolgung von Ressourcenzuordnungen dient. Als weitere Alternative kann eine beliebige Datenstruktur, etwa eine Tabelle, verwendet werden.

Bei jedem Zugriff eines der Benutzer auf die ihnen jeweils zugeordneten Ressourcen, beispielsweise Zugriffe durch Hochladen von Daten auf den Server, prüft der Server, ob der konkrete Zugriff auf die Ressourcen innerhalb des für den jeweiligen Benutzer gespeicherten Umfangs liegt. Der Zugriff wird verweigert, wenn der Umfang überschritten wird.

Nach Ablauf der Zeitdauer wird, wie bereits erläutert, die Reduzierung und Erhöhung des Ressourcenumfangs bei beiden Benutzern wieder rückgängig gemacht, und die entsprechenden Angaben in der Benutzerdatenbank oder anderen Datenstruktur entsprechend angepasst. Nachfolgende Zugriffe der Benutzer auf ihre Ressourcen werden nun hinsichtlich der neuen Angaben geprüft und gegebenenfalls verweigert. Der Ablauf einer Zeitdauer kann, wie beschrieben, immer dann geprüft werden, wenn ein Benutzer auf seine Ressourcen zugreift. Zusätzlich kann dies bereits vor dem ersten Reduzieren beziehungsweise Erhöhen geprüft werden; in diesem Fall wird das Erhöhen/Reduzieren abgebrochen, wenn die Zeitdauer bereits abgelaufen war. Die Prüfung der Zeitdauer umfasst, den aktuellen Zeitpunkt mit den Zeitangaben in der Datenbank/Datenstruktur zu vergleichen, beispielsweise durch Addieren eines Zeitstempels und einer Zeitdauer in der Datenbank/Datenstruktur und Vergleichen des Ergebnisses mit dem aktuellen Zeitpunkt. In einer Ausführungsform können Schlüssel, die zum Entschlüsseln des digitalen Objekts erforderlich waren, nach Ablauf der Zeitdauer gelöscht werden.

Das Verfahren kann die beteiligten Benutzer und insbesondere die Benutzer eventuell beteiligter Gruppen auffordern, bestimmten Schritten des Verfahrens zuzustimmen, und kann abbrechen, falls eine Zustimmung verweigert wird. Diese Aufforderung kann beispielsweise ergehen, bevor eine Änderung von Ressourcenangaben (Reduzierung/Erhöhung), vorgenommen wird. Insbesondere kann der zweite Benutzer entsprechend aufgefordert werden. Eine solche Aufforderung kann auch bereits beim Erstellen des digitalen Objekts erfolgen, beispielsweise wenn der erste Benutzer einer oder mehreren Gruppen zugeordnet ist und die freizugebende Ressource seine eigenen Ressourcen (ohne die Gruppenressourcen) übersteigt.

Das oben beschriebene Verfahren kann durch jeden dem Server bekannten Benutzer ausgeführt werden. Jeder Benutzer kann im Rahmen des ihm zugeordneten Ressourcenumfangs Ressourcen an einen oder mehrere Benutzer, auch Gruppen, freigeben. Dieser Rahmen kann, wie beschrieben, nach Ablauf einer Zeitdauer auf einen ursprünglichen Rahmen zurückgesetzt werden. Für einen einzelnen Benutzer können mehrere Erhöhungen/Reduzierungen greifen, die auf unterschiedliche Benutzern zurückgehen. Somit kann sich der verfügbare Ressourcenumfang für einen Benutzer immer wieder ändern. Auch können Ketten von Benutzerbeziehungen entstehen, bei der jeder Benutzer einer Kette Ressourcen für weitere Benutzer freigibt und diese Ressourcen jeweils nach Ablauf einer Zeitdauer zurückerhält. Die Erfindung gewährleistet, dass Benutzer immer nur auf den aktuell zugeordneten Ressourcenumfang zugreifen können, und gewährleistet, dass Ressourcen nur im zur Verfügung stehenden Umfang weitergegeben/freigegeben werden können.

In einer Ausführungsform umfasst die Erfindung neben dem Reduzieren/Erhöhen des Ressourcenumfangs jeweiliger Benutzer auch die Angabe über konkrete Ressourcen, die weitergegeben werden. Beispielsweise kann der erste Benutzer bereits beim Eingeben von Details über die weiterzugebende Ressource konkrete Merkmale der Ressource angeben, etwa bestimmte Verzeichnisse. Für die Dauer der Übertragung der Ressource an einen anderen Benutzer kann der erste Benutzer dann auf die konkrete Ressource (Verzeichnisse) nicht zugreifen. Nach Rückgabe der Ressource (Zeitablauf) ist der Zugriff dem ersten Benutzer wieder möglich. Auf diese Weise kann der erste Benutzer dem zweiten Benutzer die Bearbeitung von Daten ermöglichen, die bereits Bestandteil dieser Ressource sind, und kann später mit der Bearbeitung der Daten fortfahren. Darüber hinaus kann in dieser Ausführungsform vermerkt werden, etwa in der Datenbank/Datenstruktur, an welche Benutzer oder Gruppen eine konkrete Ressource gegenwärtig weitergegeben wurde, und wieviel Zeit verbleibt, bis die Ressource zurückgegeben wird. Der erste Benutzer kann diese Daten einsehen, beispielsweise über die bereits erläuterte Webseite des Servers.

Weitere Ausführungsformen umfassen computerlesbare Medien mit darauf gespeicherten Anweisungen, die, wenn sie durch einen Prozessor ausgeführt werden, die Schritte des obigen Verfahrens ausführen. Ferner umfassen Ausführungsformen der Erfindung auch einen Server, der eingerichtet ist, das obige Verfahren auszuführen. Der Server ist über ein Netzwerk mit Endgeräten verbunden und kommuniziert mit einem oder mehreren Benutzern, die diese Geräte bedienen. Der Server ist beispielsweise ein HTTP-Server und kann ein softwarebasierter Server und/oder ein eigenständiges netzwerkfähiges Gerät sein. Ausführungsformen der Erfindung umfassen ferner ein System, das den genannten Server und ein oder mehrere Endgeräte umfasst, die alle über Netzwerkverbindungen miteinander verbunden sind.

Die Erfindung ermöglicht somit eine effiziente Verwaltung, Zuordnung und Weitergabe von Ressourcen zwischen Benutzern.

Figur 1A zeigt ein erfindungsgemäßes Verfahren 100A zur Weitergabe von Nutzungsrechten an einer Ressource. Im Folgenden werden die wesentlichen Schritte des Verfahrens wiedergegeben. Jedoch können die oben beschriebenen unterschiedlichen Ausführungsformen ohne weiteres mit den hier wiedergegebenen Schritten kombiniert werden. Umgekehrt können Details, die unter Bezugnahme auf Figur 1A beschrieben sind, mit den vorgenannten Ausführungen kombiniert werden. So zeigt die Figur 1A beispielsweise einen "zweiten Benutzer"; jedoch können die für diesen Benutzer relevanten Schritte auch nacheinander oder gleichzeitig für mehrere zweite Benutzer ausgeführt werden, insbesondere für mehrere Benutzer, die zu einer oder mehreren Gruppen gehören.

Das Verfahren 100A wird im Wesentlichen auf einem Server ausgeführt und umfasst die Beteiligung eines ersten Benutzers und eines zweiten Benutzers, die beispielsweise über jeweilige netzwerkfähige Geräte auf den Server zugreifen. Das Verfahren 100A beginnt mit einer Anmeldung 110 des ersten Benutzers an dem Server. Wie bereits beschrieben, kann dies mittels Eingabe von Benutzername und Passwort erfolgen, entweder automatisch via Cookies und Browserfunktionalität oder manuell durch den Benutzer selbst. Der Benutzer gelangt dadurch auf eine Webseite des Servers, die auf dem Gerät des Benutzers angezeigt wird und verwendet werden kann, um auf Ressourcen des Benutzers zuzugreifen. Zudem bietet die Webseite Funktionalität zum Spezifizieren einer Ressource, die der Server verwaltet und über die der Benutzer verfügt und die er - ganz oder teilweise - an einen oder mehrere Benutzer oder auch eine Gruppe von Benutzern weitergeben möchte. Diese Funktionalität kann etwa über Betätigen eines Links auf der Webseite aufgerufen werden. In der Folge definiert der Benutzer den Umfang der weiterzugebenden Ressource sowie den oder die Zielbenutzer und/oder -gruppen und eine zeitliche Einschränkung, beispielsweise eine Zeitdauer, innerhalb der die Ressource durch den anderen Benutzer verwendet werden kann, und nach deren Ablauf die Ressource an den ersten Benutzer zurückfällt. Der Server erzeugt in Schritt 120 ein digitales Objekt, dass die Angaben des ersten Benutzers enthält. Das Objekt wird verschlüsselt, Schritt 125, und an den oder die zweiten Benutzer übertragen. Der zur Verschlüsselung verwendete Schlüssel kann, wie bereits beschrieben, ein öffentlicher Schlüssel des Servers, ein öffentlicher Schlüssel des zweiten Benutzers (oder einer Gruppe, zu der dieser Benutzer gehört), ein symmetrischer Schlüssel des Servers oder dergleichen sein. In einer Ausführungsform kann im Zuge jeder derartigen Verschlüsselung eigens ein Schlüssel beziehungsweise ein Schlüsselpaar erzeugt werden. Das Schlüsselpaar kann in Assoziation mit den Zielbenutzern und/oder -gruppen in der Datenbank gespeichert werden. In einer Ausführungsform wird lediglich der private Schlüssel eines asymmetrischen Schlüsselpaares auf diese Weise gespeichert, und der öffentliche Schlüssel direkt nach der Verschlüsselung wieder gelöscht.

Der oder die zweiten Benutzer beziehungsweise die Mitglieder einer in dem Objekt benannten Gruppe erhalten das Objekt von dem Server. Um auf die in dem Objekt definierte Ressource zugreifen zu können, müssen die Benutzer bei dem Server registriert und angemeldet sein. Diese Registrierung und/oder Anmeldung kann durch Ausführen des Objekts seitens des oder der Empfänger vereinfacht werden, beispielsweise durch Betätigen einer URI, die mit dem Objekt übertragen wurde, oder die durch Ausführen des Objekts aufgerufen wird, Schritte 130 und 140. Das Objekt kann nach erfolgter Anmeldung an den Server zurückübertragen werden. In einer Ausführungsform kann sowohl das Übertragen an die Benutzer als auch das Rückübertragen an den Server entfallen, und der Server identifiziert stattdessen das Objekt anhand der Namen oder Bezeichner der nunmehr angemeldeten Benutzer. In einer solchen Ausführungsform kann das Objekt nach dessen Erstellung mit den betreffenden Benutzern assoziiert sein, beispielsweise in einer Datenbank, die auch weitere Angaben zu den Benutzern bereithält.

Der Server entschlüsselt das Objekt in Schritt 150, beispielsweise unter Verwendung von Schlüsseln, die mit dem zweiten Benutzer assoziiert sind und in der Datenbank abgelegt sind. Gegebenenfalls wird bereits zu diesem Zeitpunkt geprüft, ob eine in dem Objekt definierte Zeitdauer bereits abgelaufen ist. Der Server liest aus dem Objekt die Angaben bezüglich der freizugebenden Ressource und passt die Ressourcenrechte des ersten und des zweiten Benutzers in der Datenbank an, indem der Ressourcenumfang des ersten Benutzers um den Ressourcenumfang des Objekts reduziert wird, und indem der Ressourcenumfang des zweiten Benutzers um den Ressourcenumfang des Objekts erhöht wird, Schritte 160 und 165. Die Weitergabe der Rechte an der Ressource ist damit abgeschlossen.

Figur 1B zeigt ein weiteres Verfahren 100B, das den Zugriff eines Benutzers auf seine Ressourcen wiedergibt.

In Schritt 170 greift (einer) der zweite(n) Benutzer auf Ressourcen zu, die der Server verwaltet. Der Benutzer muss zu diesem Zeitpunkt bereits beim Server angemeldet sein. Der Server prüft zunächst, ob der Zugriff dem Umfang nach den gespeicherten Ressourcenumfang des zweiten Benutzers übersteigt. Zudem kann hierbei geprüft werden, ob der Ressourcenumfang dieses Benutzers ganz oder teilweise einem Zeitablauf unterliegt. Ist die letztere Bedingung erfüllt, wird der Ressourcenumfang um eine in der Datenbank angegebene Höhe (gespeichert nach der in dem Verfahren 100A erfolgten Entschlüsselung des Objekts) reduziert und der Ressourcenumfang des ersten Benutzers (auch dieser nach der Entschlüsselung des Objekts in Verbindung mit dem Ressourcenumfang des zweiten Benutzers gespeichert) entsprechend erhöht, Schritte 185, 190 und 195. Nur wenn der verbleibende Ressourcenumfang des zweiten Benutzers nach dieser Maßnahme noch den Zugriff gestattet, wird dieser weiter bearbeitet; andernfalls wird der Zugriff verweigert.

Greifen mehrere zweite Benutzer unabhängig voneinander auf eine Ressource zu, die ihnen gemeinschaftlich zugeordnet wurde und deren Zeitdauer abgelaufen war, so wird bereits beim ersten dieser Zugriffe die Ressource - wie beschrieben - zurückübertragen. In einer Ausführungsform kann die Rückübertragung (Reduzieren und Erhöhen) zusätzlich eine Rückübertragung sämtlicher ursprünglicher Adressaten des digitalen Objekts vorgenommen werden, wobei die Erhöhung auf Seiten des ersten Benutzers und die Reduzierungen aller anderen Nutzer der Ressource jeweils einmal vorgenommen werden. In dieser Ausführungsform kann bereits nach dem ersten der Zugriffe (und dem festgestellten Ablauf der Zeitdauer) ermittelt werden, welche anderen Benutzer diese Ressource verwenden. Hierzu kann bereits im Zuge der Schritte 150, 160 und 165 (Enschlüsseln, Reduzieren, Erhöhen) des Verfahrens 100A in der Datenstruktur in einem Eintrag des ersten Benutzers vermerkt werden, für welche Benutzer die Ressource freigegeben wurde.

Ein Vorteil der Erfindung besteht darin, dass Benutzer selbständig Rechte an ihren Ressourcen an andere Benutzer weitergeben können, ohne dass es einer Vermittlungsstelle hierfür bedarf. Dies ist wesentlich effizienter als herkömmliche Maßnahmen zur Übertragung von Rechten, und aufgrund der verringerten Anzahl an Transaktionen auch sicherer. Die Erfindung ermöglicht selbst dann die Weitergabe von Rechten, wenn der Zielbenutzer beim Server noch gar nicht bekannt ist; zu diesem Zweck ist eine Registrierung en passant vorgesehen.

## Patentansprüche

1. Verfahren, umfassend:
Durchführen eines Anmeldeprozesses an einem Server für einen ersten Benutzer, wobei dem ersten Benutzer ein Bezeichner zugeordnet wird;
Durchführen eines Prozesses zur Erzeugung eines digitalen Objekts, anhand von Daten, die der erste Benutzer an dem Server eingibt, wobei die Daten eine Angabe über den Umfang einer Ressource enthalten, und wobei das digitale Objekt den Bezeichner und die Angabe über den Umfang der Ressource sowie eine Zeitdauer enthält;
Verschlüsseln des digitalen Objekts und Übermitteln des digitalen Objekts an einen zweiten Benutzer, wobei eine Zieladresse des zweiten Benutzers durch den ersten Benutzer des Servers angegeben wird;
Durchführen eines Registrierungs- oder Anmeldeprozesses über den Server für den zweiten Benutzer als Antwort auf Ausführen des digitalen Objekts durch den zweiten Benutzer;
Entschlüsseln des digitalen Objekts und Auslesen des Bezeichners des ersten Benutzers sowie der Angabe über den Umfang der Ressource und der Zeitdauer;
Reduzieren einer Angabe über den Umfang der Ressource für den ersten Benutzer in einer Datenstruktur um den angegebenen Umfang der Ressource, und Erhöhen einer Angabe über den Umfang der Ressource für den zweiten Benutzer in der Datenstruktur um den angegebenen Umfang der Ressource;
Speichern der Zeitdauer für den ersten Benutzer und den Umfang der Ressource in der Datenstruktur sowie Speichern der Zeitdauer für den zweiten Benutzer und den Umfang der Ressource in der Datenstruktur;
Erhöhen der Angabe über den Umfang der Ressource für den ersten Benutzer in der Datenstruktur nach Ablauf der Zeitdauer für den ersten Benutzer, und Reduzieren der Angabe über den Umfang der Ressource für den zweiten Benutzer in der Datenstruktur nach Ablauf der Zeitdauer für den zweiten Benutzer;
wobei die Ressource Speicherplatz auf dem Server und/oder Zugriffe auf Daten auf dem Server umfasst.

2. Verfahren nach Anspruch 1, wobei Durchführen des Prozesses zur Erzeugung des digitalen Objekts umfasst, zu prüfen, ob der Umfang der Ressource denjenigen Umfang der Ressource übersteigt, der dem ersten Benutzer zugeordnet ist; oder
wobei der erste Benutzer einer Gruppe von Benutzern angehört, die anhand des Bezeichners des ersten Benutzers und einem Bezeichner der Gruppe ermittelt wird, und wobei das Durchführen des Prozesses zur Erzeugung des digitalen Objekts umfasst, zu prüfen, ob der Umfang der Ressource die Summe des Umfangs der Ressource aller Benutzer übersteigt, die der Gruppe zugeordnet sind.

3. Verfahren nach Anspruch 1 oder 2, wobei das digitale Objekt eine URI enthält, und wobei Ausführen des digitalen Objekts Betätigen der URI in einem Browser umfasst.

4. Verfahren nach einem der vorstehenden Ansprüche, wobei das Speichern einer Zeitdauer zusätzlich umfasst, einen aktuellen Zeitstempel in der Datenstruktur zu speichern.

5. Verfahren nach Anspruch 4, ferner umfassend Prüfen, ob die Zeitdauer abgelaufen ist, bevor das Erhöhen der Angabe über den Umfang der Ressource für den ersten Benutzer sowie das Reduzieren der Angabe über den Umfang der Ressource für den zweiten Benutzer durchgeführt wird, wobei das Prüfen anhand eines aktuellen Zeitstempels sowie der in der Datenstruktur gespeicherten Zeitdauer und eines zugehörigen Zeitstempels durchgeführt wird.

6. Verfahren nach einem der vorstehenden Ansprüche, wobei das Übermitteln des digitalen Objekts per E-Mail oder mittels eines Messaging-Systems erfolgt.

7. Verfahren nach einem der vorstehenden Ansprüche, wobei das Verschlüsseln des digitalen Objekts mittels eines Schlüssels erfolgt, der für den ersten Benutzer automatisch erzeugt und in der Datenstruktur gespeichert wird, und wobei das Entschlüsseln des digitalen Objekts die Verwendung des Schlüssels umfasst.

8. Verfahren nach Anspruch 7, wobei der Schlüssel nach dem Entschlüsseln oder nach Ablauf der Zeitdauer gelöscht wird, und wobei das Verfahren abgebrochen wird, wenn vor dem Entschlüsseln des digitalen Objekts der Schlüssel nicht vorliegt.

9. Verfahren nach einem der vorstehenden Ansprüche, wobei das Verfahren vor oder nach dem Entschlüsseln des digitalen Objekts den zweiten Benutzer auffordert, einer Anpassung seiner Rechte an der Ressource zuzustimmen, und wobei das Verfahren abbricht, wenn der zweite Benutzer nicht zustimmt.

10. Computerlesbares Medium mit darauf gespeicherten Befehlen, die, wenn sie durch einen Prozessor ausgeführt werden, das Verfahren nach einem der vorstehenden Ansprüche durchführen.

## Claims

1. A method comprising:
performing a login process at a server for a first user, wherein an identifier is assigned to the first user;
performing a process for generating a digital object based on data entered by the first user at the server, wherein the data includes an indication of the amount of a resource, and wherein the digital object includes the identifier and the indication of the amount of the resource and a duration of time;
encrypting the digital object and transmitting the digital object to a second user, wherein a destination address of the second user is indicated by the first user of the server;
performing a registration or login process via the server for the second user in response to execution of the digital object by the second user;
decrypting the digital object and reading the identifier of the first user and the indication of the amount of the resource and the duration of time;
reducing an indication of the amount of the resource for the first user in a data structure by the indicated amount of the resource, and increasing an indication of the amount of the resource for the second user in the data structure by the indicated amount of the resource;
storing the duration of time for the first user and the amount of the resource in the data structure, and storing the duration of time for the second user and the amount of the resource in the data structure;
increasing the indication of the amount of the resource for the first user in the data structure after expiration of the duration of time for the first user, and
reducing the indication of the amount of the resource for the second user in the data structure after expiration of the duration of time for the second user;
wherein the resource comprises storage space on the server and/or accesses to data on the server.

2. The method of claim 1, wherein performing the process for generating the digital object comprises checking whether the amount of the resource exceeds the amount of the resource assigned to the first user; or
wherein the first user belongs to a group of users determined based on the identifier of the first user and an identifier of the group, and wherein performing the process for generating the digital object comprises checking whether the amount of the resource exceeds the sum of the amount of the resource of all users assigned to the group.

3. The method of claim 1 or 2, wherein the digital object includes a URI, and wherein executing the digital object comprises operating the URI in a browser.

4. The method of any preceding claim, wherein storing a duration of time additionally comprises storing a current timestamp in the data structure.

5. The method of claim 4, further comprising checking whether the duration of time has expired before performing the increasing of the indication of the amount of the resource for the first user and the reducing of the indication of the amount of the resource for the second user, wherein the checking is performed based on a current timestamp and the duration of time stored in the data structure and an associated timestamp.

6. The method of any preceding claim, wherein transmitting the digital object is by email or by means of a messaging system.

7. The method of any preceding claim, wherein encrypting the digital object is by means of a key that is automatically generated for the first user and stored in the data structure, and wherein decrypting the digital object comprises using the key.

8. The method of claim 7, wherein the key is deleted after decrypting or after expiration of the duration of time, and wherein the method is aborted if the key is not present before decrypting the digital object.

9. The method of any preceding claim, wherein before or after decrypting the digital object, the method requests the second user to consent to an adjustment of his rights to the resource, and wherein the method is aborted if the second user does not consent.

10. A computer-readable medium having stored thereon instructions that, when executed by a processor, perform the method of any preceding claim.

## Revendications

1. Procédé comprenant :
la réalisation d'un processus de connexion à un serveur pour un premier utilisateur, dans lequel un identifiant est attribué au premier utilisateur ;
la réalisation d'un un processus de génération d'un objet numérique, sur la base de données que le premier utilisateur saisit sur le serveur, dans lequel les données contiennent une indication de l'étendue d'une ressource, et dans lequel l'objet numérique contient l'identifiant et l'indication de l'étendue de la ressource ainsi qu'une durée ;
le cryptage de l'objet numérique et la transmission de l'objet numérique à un deuxième utilisateur, dans lequel une adresse cible du deuxième utilisateur est indiquée par le premier utilisateur du serveur ;
la réalisation d'un processus d'enregistrement ou de connexion via le serveur pour le deuxième utilisateur en réponse à l'exécution de l'objet numérique par le deuxième utilisateur ;
le décryptage de l'objet numérique et la lecture de l'identifiant du premier utilisateur ainsi que l'indication de l'étendue de la ressource et la durée ;
la réduction d'une indication de l'étendue de la ressource pour le premier utilisateur dans une structure de données de l'étendue de la ressource indiquée, et l'augmentation d'une indication de l'étendue de la ressource pour le deuxième utilisateur dans la structure de données de l'étendue de la ressource indiquée ;
l'enregistrement de la durée pour le premier utilisateur et l'étendue de la ressource dans la structure de données ainsi que l'enregistrement de la durée pour le deuxième utilisateur et l'étendue de la ressource dans la structure de données ;
l'augmentation de l'indication de l'étendue de la ressource pour le premier utilisateur dans la structure de données après l'expiration de la durée pour le premier utilisateur, et la réduction de l'indication de l'étendue de la ressource pour le deuxième utilisateur dans la structure de données après l'expiration de la durée pour le deuxième utilisateur ;
dans lequel la ressource comprend un espace de stockage sur le serveur et/ou des accès à des données sur le serveur.

2. Procédé selon la revendication 1, dans lequel la réalisation du processus de génération de l'objet numérique comprend la vérification si l'étendue de la ressource dépasse l'étendue de la ressource qui est attribuée au premier utilisateur ; ou
dans lequel le premier utilisateur appartient à un groupe d'utilisateurs qui est déterminé sur la base de l'identifiant du premier utilisateur et d'un identifiant du groupe, et dans lequel la réalisation du processus de génération de l'objet numérique comprend la vérification si l'étendue de la ressource dépasse la somme de l'étendue de la ressource de tous les utilisateurs qui sont attribués au groupe.

3. Procédé selon la revendication 1 ou 2, dans lequel l'objet numérique contient une URI et dans lequel la réalisation de l'objet numérique comprend d'actionner l'URI dans un navigateur.

4. Procédé selon l'une des revendications précédentes, dans lequel l'enregistrement d'une durée comprend en outre l'enregistrement d'un horodatage actuel dans la structure de données.

5. Procédé selon la revendication 4, comprenant en outre la vérification si la durée a expiré avant que l'augmentation de l'indication de l'étendue de la ressource pour le premier utilisateur ainsi que la réduction de l'indication de l'étendue de la ressource pour le deuxième utilisateur soient effectuées, dans lequel la vérification est effectuée sur la base d'un horodatage actuel ainsi que de la durée enregistrée dans la structure de données et d'un horodatage associé.

6. Procédé selon l'une des revendications précédentes, dans lequel la transmission de l'objet numérique a lieu par e-mail ou au moyen d'un système de messagerie.

7. Procédé selon l'une des revendications précédentes, dans lequel le cryptage de l'objet numérique a lieu au moyen d'une clé qui est générée automatiquement pour le premier utilisateur et enregistrée dans la structure de données, et dans lequel le décryptage de l'objet numérique comprend l'utilisation de la clé.

8. Procédé selon la revendication 7, dans lequel la clé est supprimée après le décryptage ou après l'expiration de la durée, et dans lequel le procédé est interrompu si la clé n'est pas présente avant le décryptage de l'objet numérique.

9. Procédé selon l'une des revendications précédentes, dans lequel le procédé, avant ou après le décryptage de l'objet numérique, invite le deuxième utilisateur à accepter une adaptation de ses droits sur la ressource, et dans lequel le procédé est interrompu si le deuxième utilisateur n'accepte pas.

10. Support lisible par ordinateur avec des instructions enregistrées dessus qui, lorsqu'elles sont exécutées par un processeur, exécutent le procédé selon l'une des revendications précédentes.
